# EUROPEAN PATENT SPECIFICATION

(11) **EP 2 764 388 B1**
(45) Date of publication and mention of the grant of the patent: **17.08.2016**
(21) Application number: 12775586.6
(22) Date of filing: 04.10.2012
(51) Int. Cl.: G02B 6/38, G02B 6/44

(54) **ATTACHMENT STRUCTURE FOR FIBER-OPTIC CABLES AND ASSEMBLIES USING SAME**
BEFESTIGUNGSSTRUKTUR FÜR GLASFASERKABEL UND ANORDNUNGEN DAMIT
STRUCTURE DE FIXATION POUR CÂBLES DE FIBRE OPTIQUE ET ENSEMBLES L'UTILISANT

(30) Priority: 05.10.2011 US 201161543607 P
(43) Date of publication of application: 13.08.2014
(60) Divisional application: 16167282.9
(73) Proprietor: Corning Optical Communications LLC, Hickory, NC 28601 (US)
(72) Inventor: ISENHOUR, Micah Colen, Lincolnton, North Carolina 28092 (US); KNECHT, Dennis Michael, Hickory, North Carolina 28601 (US); LUTHER, James Phillip, Hickory, North Carolina 28602 (US)
(74) Representative: Sturm, Christoph
(86) International application number: PCT/US2012/058588
(87) International publication number: WO 2013/052565

(56) References cited:
- EP-A2- 0 131 283
- WO-A2-03/042740
- US-A- 4 496 213
- US-A1- 2010 209 067
- US-A1- 2011 229 083

## Description

This application is a continuation of International Application No. PCT/US12/58588, filed October 4, 2012, which claims the benefit of priority to U.S. Application No. 61/543,607, filed October 5, 2011.

### FIELD

The present disclosure relates to fiber-optic cables, and in particular relates to an attachment structure for a fiber-optic cable that allows the cable to be attached for connectorized, and further relates to attachment structures for fiber-optic-cable assemblies that support a substrate such as a circuit board at the front end.

### BACKGROUND

Fiber-optic cables are known for their ability to transmit data at faster rates than electrical wires. With the increasing demand for high-speed data transmission for consumer electronic devices (smart phones, tablet computers, laptop computers, digital cameras, video cameras, etc.), fiber-optic cables are starting to replace electrical cables for data transmission applications.

To this end, the fiber-optic cables need to be terminated in a manner that allows for them to be operably connected to the electronic devices. For example, many consumer electronic devices have Universal Serial Bus (USB) electrical ports for establishing an electrical connection with an external device. The latest USB specification (USB 3.0) supports a data rate of 5 Gb/s, which is ten times faster than the previous USB specification (USB 2.0), and the latest version is still backwards compatible with the USB 2.0. As fiber optic cable designs begin migrate into this space to support faster data rates, they still must be backwards compatible with the installed base of ports. Active optical cable (AOC) assemblies allow the use of the optical fibers as the transmission medium between connectors instead of copper wires; however, the optical signals conveyed by the optical fibers are converted into electrical signals so that the connector has an electrical interface making compatible with installed base.

In other words, for an AOC fiber-optic cable to be connected to a USB port, it must be terminated with a USB electrical interface configured to transmit electrical signals at the port connection. Unlike a fiber-optic cable used for telecommunications that experiences relatively few connections and disconnections to a panel in a controlled environment, a fiber-optic cable used for consumer electronics will experience frequent connections and disconnections in a variety of environments. Consequently, the mechanical connection between the fiber-optic cable and the connector that terminates the cable must be robust for the large number of mating/unmating cycles.

US 2011/229083 A1 discloses an attachment structure for attaching a connector to a fiber-optic cable having at least one strength member and at least one optical fiber, comprising a sleeve having opposite front and back ends.

EP 0 131 283 A1 discloses an attachment structure according to the preamble of claim 1.

### SUMMARY

An aspect of the disclosure is an attachment structure for attaching a connector to a fiber-optic cable having at least one strength member and at least one optical fiber. The attachment structure is defined in claim 1. Consequently, the attachment structure can advantageously strain-relieve the strength members of the fiber optic cable at the back end and mount a substrate at the front end to form a compact active optic cable assembly.

The attachment structure can have several different types of optional securing features as discussed herein. The securing feature of the attachment structures may be configured so that the at least one strength member can be secured to the securing feature of the attachment structure according to the concepts disclosed.

Another aspect of the disclosure is an attachment assembly that includes a fiber-optic cable attached to the attachment structure at the back end by the at least one strength member engaging the at least one securing feature, with the at least one optical fiber passing through the central bore and that may have a front end having a front mounting section for supporting a circuit board.

Another aspect of the disclosure is a fiber-optic-connector assembly that includes the above-described attachment assembly, and a connector attached to the front end of the attachment assembly, with the at least one optical fiber being operably connected to the connector.

Another aspect of the disclosure is a method of making a fiber-optic-connector assembly according to claim 5.

Another aspect of the disclosure is an attachment assembly for a fiber-optic-connector assembly of claim 11. The fiber-optic cable is split to define first and second split ends that respectively contain the first and second strength members. The attachment assembly also includes an attachment structure defined by a sleeve having front and back ends, a central bore, and an outer surface that includes on opposite sides first and second outwardly extending securing features or uses the outer barrel and a crimp band as discussed. The first and second split ends are disposed adjacent a portion of the outer surface of the attachment structure at the back end, with the at least one optical fiber passing through the central bore from the back end and extending through the front end. If extending securing features are used the first and second strength members may respectively engage the first and second securing features and run back to the fiber-optic cable and are secured thereto under tension by a securing member.

Another aspect of the disclosure is a fiber-optic-connector assembly that includes the above-described attachment assembly, and a connector operably connected to the front end of the attachment feature, with the at least one optical fiber operably coupled to at least one component of the connector.

Additional features and advantages are set forth in the description that follows, and in part will be readily apparent to those skilled in the art from the description or recognized by practicing the embodiments as described in the written description and claims hereof, as well as the appended drawings. It is to be understood that both the foregoing general description and the following Detailed Description are merely exemplary, and are intended to provide an overview or framework for understanding the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the Detailed Description serve to explain principles and operation of the various embodiments. As such, the disclosure will become more fully understood from the following Detailed Description, taken in conjunction with the accompanying Figures, in which:
FIG. 1A is an elevated view of an example fiber-optic cable that includes two peripheral strength members;
FIG. 1B is an end-on view of the fiber cable of FIG. 1A having jacket split ends, where each split end includes a strength member extending therefrom;
FIGS. 2A through 2C are elevated views of a first example fiber-optic-cable assembly that includes the fiber-optic cable, a connector, and an attachment structure therebetween that attaches the fiber-optic cable to the connector and mounts the circuit board;
FIGS. 2D through 2F are similar to FIGS. 2A through 2C and illustrate a second example fiber-optic-cable assembly wherein the attachment structure secures the strength members to an outer barrel using a crimp band;
FIGA. 3A and 3B are exploded views of first and second examples of the fiber-optic-cable assembly, respectively;
FIG. 4A is a front elevated view of an example embodiment of the attachment structure having securing features that extend from the outer surface of the main body, shown along with the back end of a printed circuit board disposed adjacent the front mounting section of the attachment structure;
FIG. 4B is a cut-away view of the attachment structure and shows a longitudinal cross-section of the structure;
FIGS. 5A and 5B are similar to FIGS. 4A and 4B, and show an example attachment structure that uses the outer barrel of the main body for securing the strength members using a crimp band;
FIGS. 6A and 6B are close-up bottom-up and top-down elevated views of a central portion of the fiber-optic-cable assembly that includes the strength member secured to the securing features of the attachment structure;
FIG. 6C is similarto FIG. 6B and shows an example fiber-optic-cable assembly that utilizes an attachment structure having the strength members secured to the outer barrel of the main body of the attachment structure using a crimp band;
FIG. 7A is a side-elevated side view of the fiber-optic-cable assembly and includes a close-up inset that shows an example of how a strength member can engage optional securing features; and
FIG. 7B is similar to FIG. 7A and illustrates an embodiment of the fiber-optic-cable assembly wherein the attachment structure has the strength members secured to the using a crimp band on a portion of the main body.

### DETAILED DESCRIPTION

Reference is now made in detail to various embodiments of the disclosure, examples of which are illustrated in the accompanying drawings. Whenever possible, the same or like reference numbers and symbols are used throughout the drawings to refer to the same or like parts. The drawings are not necessarily to scale, and one skilled in the art will recognize where the drawings have been simplified to illustrate the key aspects of the disclosure.

The claims as set forth below are incorporated into and constitute part of this Detailed Description.

The entire disclosure of any publication or patent document mentioned herein is incorporated by reference.

Cartesian coordinates are shown in some of the Figures for the sake of reference and are not intended to be limiting as to direction or orientation.

The term "connectorize" as used herein means to operably attach or otherwise operably secure a connector to a fiber-optic cable. In the description below, the term "fiber-optic-connector assembly" can be considered as synonymous with the term "connectorized fiber-optic cable."

### Fiber-optic cable with strength members

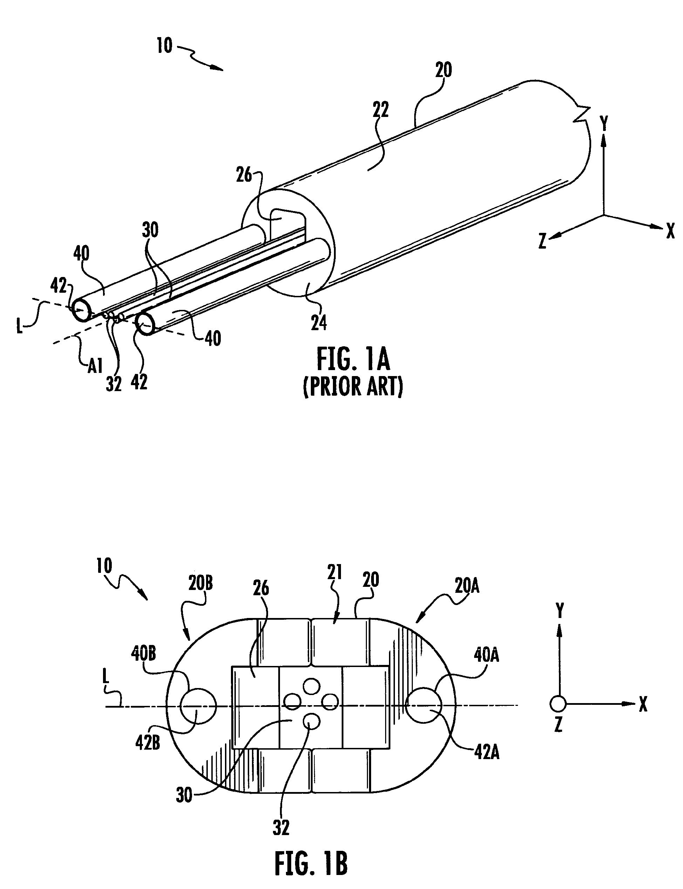

FIG. 1A is an elevated view of an example prior art fiber-optic cable ("cable") 10. The cable 10 includes a jacket 20 that defines a cable central axis A1, which is shown oriented along the Z-direction. The jacket 20 has an outer surface 22 and includes a central longitudinal (axial) cavity 26 configured to support at least one optical fiber 30, with four optical fibers being shown by way of example. The optical fibers 30 have respective ends 32.

The cable 10 also includes at least one strength member 40 that runs longitudinally down the cable at an off-axis (peripheral) position between central cavity 26 and jacket outer surface 22. The jacket 20 is also shown as having a terminal end 24. In one example, cable 10 includes two peripheral strength members 40, which are shown protruding from terminal end 24 of jacket 20 and having respective ends 42. The strength members 40 are disposed on either side of central cavity 26 and reside along an imaginary line denoted L that includes cable central axis A1. Here, imaginary line L is oriented along the X-axis. This configuration provides resistance to bending of cable 10 in the X-Z plane but allows for bending in the Y-Z plane. In an example, central cavity 26 is elongated in the Y-direction to provide room for optical fibers 30 to move and adjust their position when cable 10 is bent in the Y-Z plane.

Example strength members 40 include members that preferably provide anti-buckling strength to cable 10. Example materials for strength members 40 include stranded stainless steel, copper and aramid fibers such as KEVLAR, fiberglass, and the like. However, the concepts disclosed may be used with fiber optic cables having strength members that generally lack anti-buckling characteristics such as aramid yarns or the like.

FIG. 1B is an end-on view of an example of cable 10 wherein jacket 20 is split at terminal end 24 to form first and second jacket split ends 20A and 20B. The first and second jacket split ends 20A and 20B define a slit opening 21 in jacket 20. The jacket split ends 20A and 20B each include one strength member 40 that extends from terminal end 24. The strength members 40 associated with jacket split ends 20A and 20B are hereafter respectively denoted as strength members 40A and 40B, with their respective ends denoted as 42A and 42B. The at least one optical fiber 30 also extends from terminal end 24. This allows for strength members 40A and 40B to be laterally separated and used to perform a securing function, as described below, while also allowing the at least one optical fiber 30 to be routed in a select manner, also as described below.

### Fiber-optic-cable assembly

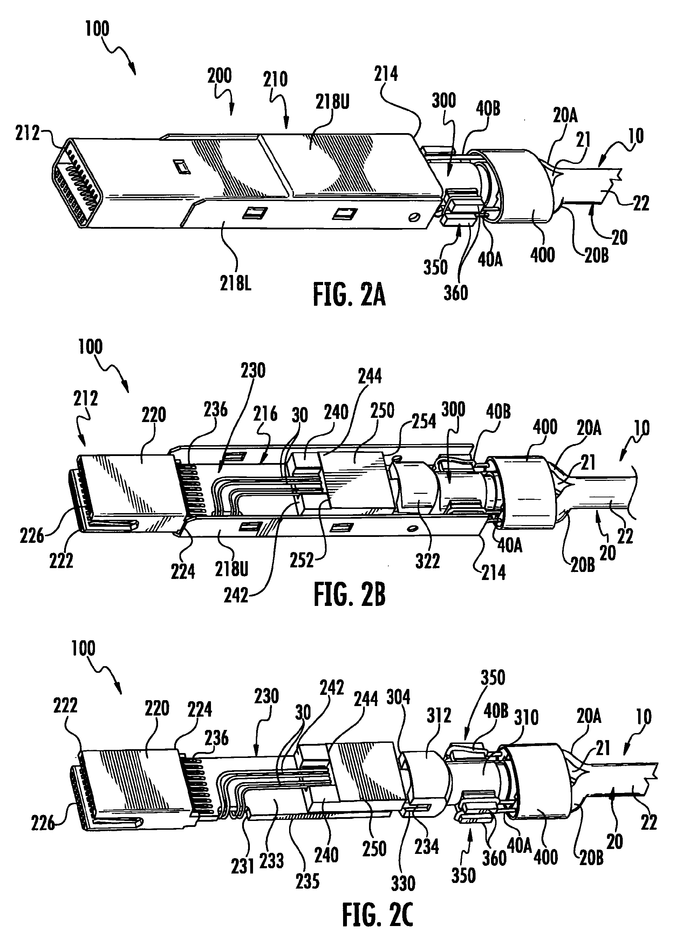

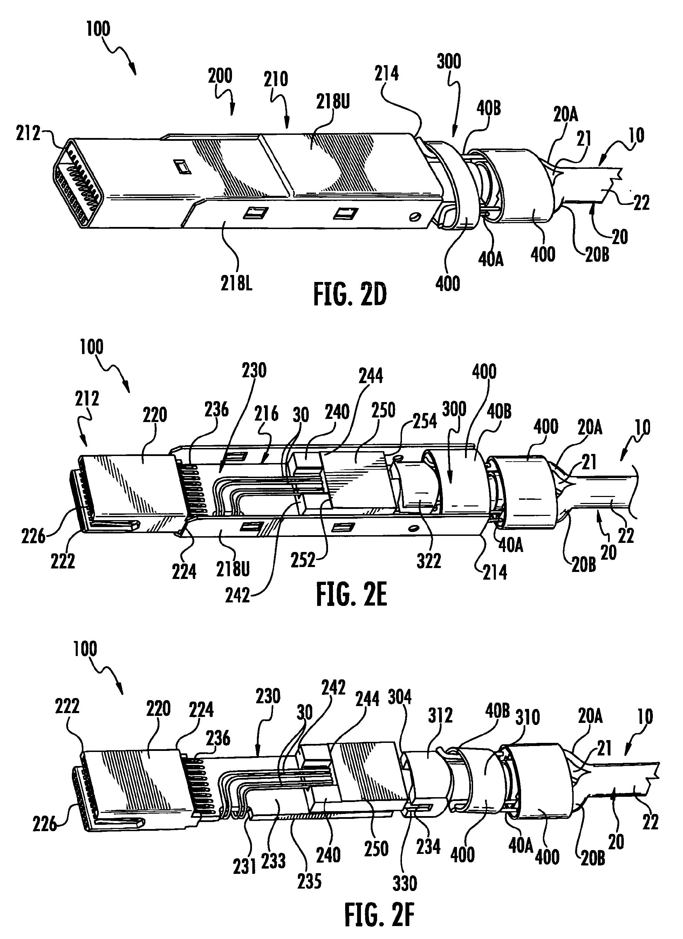

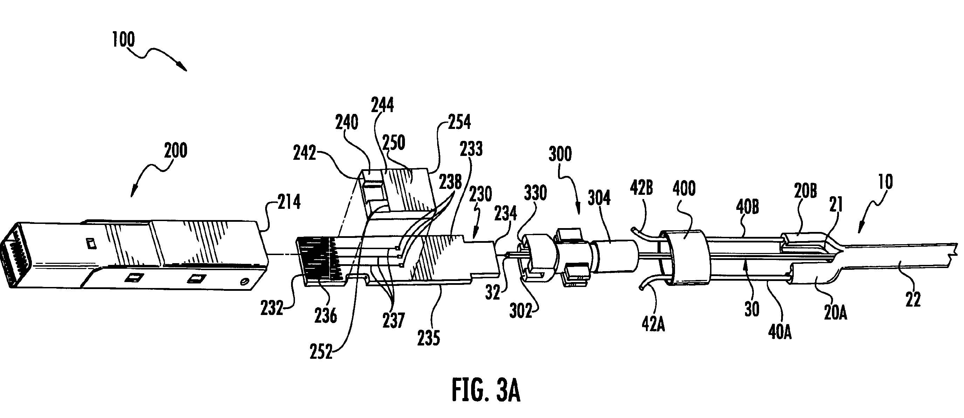

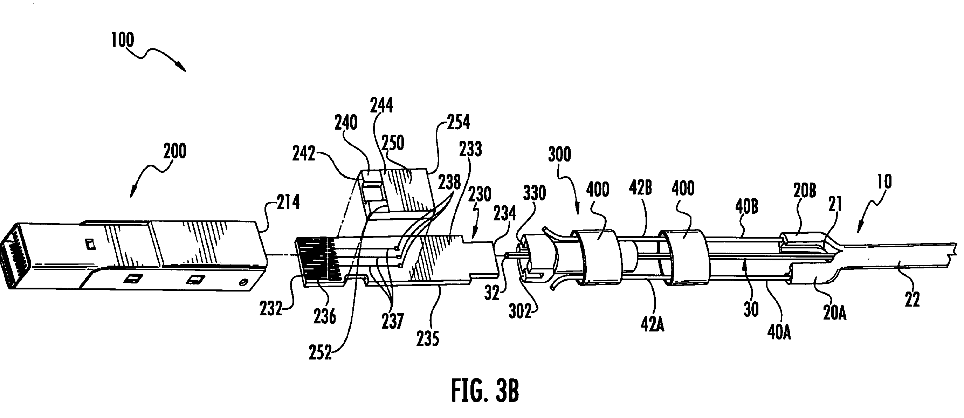

FIGS. 2A through 2C are elevated views of a first example fiber-optic-cable assembly ("assembly") 100 that include optional securing features that extend from the body of the attachment structure, and FIG. 2E through 2F are elevated views of a second example assembly 100 that secures the strength members of the cable using the outer barrel of body along with a crimp band. Assembly 100 includes cable 10, a connector 200 and an attachment structure 300 therebetween that attaches the connector to the cable, i.e., connectorizes the cable. FIG. 3A and FIG. 3B are exploded views of the first and second examples of assembly 100, respectively. The connector 200 is shown by way of example as a USB connector configured to transmit both electrical and optical signals, or more precisely to manage the conversion of electrical signals to optical signals and vice versa. However, assembly 100 can be formed using a purely optical connector 200.

The connector 200 includes a housing 210 having a front end 212 that also generally defines a connector front end, a back end 214 that generally defines a connector back end, and an interior 216 that accommodates a number of connector components as described below. In the example shown, housing 210 is formed from a top section 218U and a bottom section 218L. FIGS. 2C and 2F show connector 200 without housing 210 to illustrate example components of an optical-electrical connector.

With reference in particular to FIGS. 2B and 2C and FIGS. 2E and 2F, connector 200 includes an electrical connector 220 adjacent connector front end 212 and having front and back ends 222 and 224, and electrical contacts 226. The connector 200 also includes a circuit board 230 having front and back ends 232 and 234 and top and bottom sides 233 and 235. The connector 200 also includes a ferrule 240 with front and back ends 242 and 244. The connector 200 further includes a total-internal reflection (TIR) member 250 having front and back ends 252 and 254. The electrical connector 220 is electrically connected at its back end 224 to electrical contacts 236 at front end 232 of circuit board 230.

As shown in this explanatory embodiment, the optical fibers 30 from cable 10 pass through attachment structure 300 in the manner discussed below and run along bottom side 235 of circuit board 220. The optical fibers 30 may be routed to top side 233 of circuit board 230 through a notch 231 in one of the edges of the circuit board. The optical fibers 30 are then routed back in the opposite direction to ferrule 240 from ferrule front end 242 to ferrule back end 244. However, the routing of the optical fiber(s) may be conducted in any suitable manner within the connector.

The ferrule 240 serves to support optical fibers 30 so that optical fiber ends 32 interface with TIR member 250 at front end 252. The TIR member 250 serves to place the one or more optical fiber ends 32 in optical communication with respective one or more components 238 operably supported by circuit board 230. In an example, each of components 238 comprises either a photodetector or a light transmitter, such as a vertical-cavity surface-emitting laser (VCSEL), operably supported on circuit board top side 233, as shown in FIG. 3A. The one or more components 238 are electrically connected to circuit board electrical contacts 236 via electrical wiring 237.

### Attachment structure

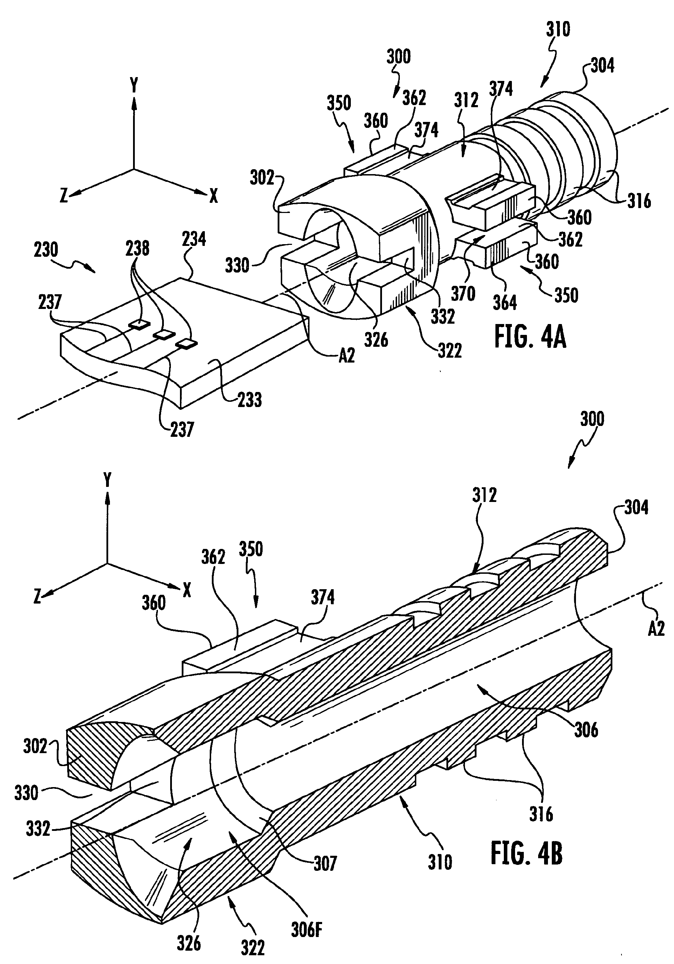

FIG. 4A is a front elevated view of first example embodiment of attachment structure 300 according to the disclosure having optional securing features that extend from the attachment structure. FIG. 4B is a cut-away view of attachment structure 300 of FIG. 4A and shows a longitudinal cross-section.

The attachment structure 300 has the general form of an elongate sleeve and has a front end 302, a back end 304 and a central bore 306 that runs generally along a longitudinal axis A2. The central bore 306 is sized to pass at least one optical fiber 30, and in an example is sized to pass multiple optical fibers. That is to say, central bore 306 is sized so that at least one optical fiber 30 can be inserted into central bore 306 at back end 304 so that it extends from the front end 302.

The attachment structure 300 includes a generally cylindrical main body section 310 that includes back end 304 and that has an outer surface 312. In an example, outer surface 312 includes one or more annular protrusions (ribs) 316 for gripping and securing one or more strength members and/or the cable jacket. However, the barrel portion of the main body section may be used for securing strength without using the ribs.

In an example, main body section 310 transitions to a larger-size front mounting section 322 that includes front end 302. In an example, front mounting section 322 has an axial length that is about 20% to 25% of the overall axial length of attachment structure 300. Also in an example, front mounting section 322 is made elongate in one direction, e.g., the X-direction as shown. In another example, front mounting section 322 has substantially the same diameter as main body section 310.

The front mounting section 322 includes at front end 302 a generally round or oval aperture 326 that is shown having its long dimension in the Y-direction. In an example, aperture 326 is outwardly flared. In an example, aperture 326 includes a slot 330 defined in part by an endwall 332 that defines the start of main body section 310. The slot 330 is sized to receive a portion of circuit board 230, e.g., back end 234, as illustrated in FIG. 4. Although, slot 320 is shown generally centered in the front end 302 it may have any suitable location such as a generally offset location as desired.

As best seen in FIG. 4B, front mounting section 322 also optionally defines a front portion 306F of central bore 306 that is slightly larger than the portion of the central bore of main body section 310. A transition ledge 307 resides adjacent front portion 306F of bore 306 at or near where main body section 310 begins.

In this embodiment, the attachment structure 300 includes one or more optional securing features 350 extending from the outer surface 312 adjacent front mounting section 322 and intend to have the strength member wrap about the same. In an example, attachment structure 300 includes two securing features 350 that are disposed 180° apart (i.e., on opposite sides of the attachment structure), as shown. Each securing feature 350 is configured so that strength member 40 can be secured thereto, e.g., wrapped around, wrapped through or both wrapped around and through as desired. In various examples, securing feature 350 supports a partial wrap, a single wrap or multiple wraps of strength member 40, as described in greater detail below.

An advantage of having two securing features 350 on opposite sides of attachment structure 300 is that it allows for cable 10 to be secured to the attachment structure with symmetry, i.e., the forces from the tension of the strength members can be substantially balanced in the X-Z plane, as opposed to pulling on one securing feature on one side of the attachment structure. Note that in an example, slot 330 is oriented in substantially the same plane (shown as the X-Z plane) as the two securing features 350.

An advantage of locating securing features 350 behind front mounting section 222 is that the securing features can remain outside of connector housing 210 while the front mounting section can be inserted into and reside within connector housing interior 216 at housing back end 214.

An example securing feature 350 includes first and second tabs 360 that outwardly (e.g., laterally or radially) extend from main body section 310, with each tab having top and bottom sides 362 and 364. The tabs 360 are spaced apart, such as in the Y-direction, so that the opposing top and bottom sides 362 and 364 define a slot 370 that runs in the Z-direction, i.e., in the direction of central axis A2. The top 362 of top tab 360 and bottom 364 of bottom tab 360 respectively define the top and bottom of securing feature 350 and can include respective recesses 374 sized to accommodate strength member 40. In addition, slot 370 can have a width sized to at least partially accommodate strength member 40, and a depth to accommodate at least one pass and in an example multiple passes of a strength member therethrough. A partial wrap of strength member 40 may include, for example, a single wrap about one of tabs 360.

In an example embodiment, attachment structure 300 is formed as a unitary member formed from a single material. In one example embodiment, attachment structure 300 is formed from a polymer, while in another example embodiment it is formed from a metal. In an example, attachment structure 300 is formed by a molding process.

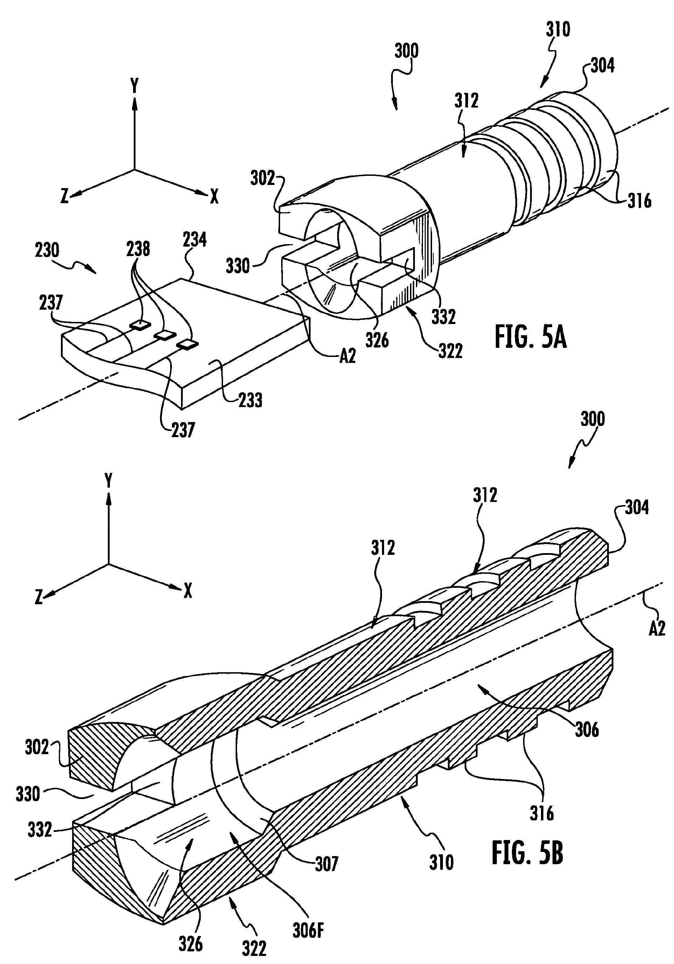

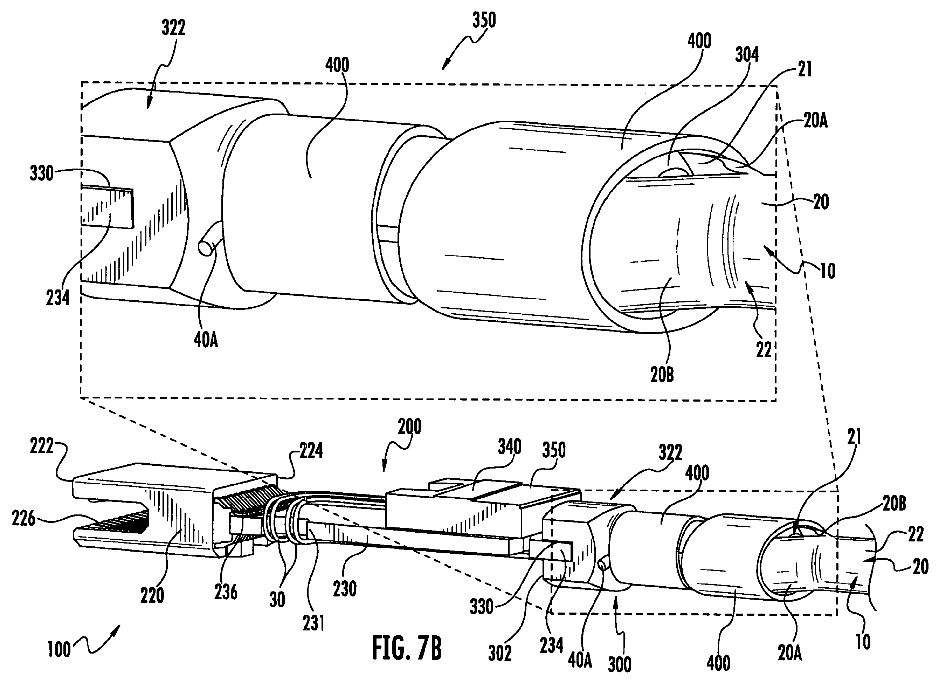

FIGS. 5A and 5B are similar to FIGS. 4A and 4B, and illustrate a second example embodiment of attachment structure 300 that is the similar as that shown in FIGS. 4A and 4B but that does not include the optional tabs shown in the attachment structure 300 of that embodiment. In other words, the strength members of the fiber optic cable may be secured to the outer barrel of the main body using a crimp band as shown in FIG. 7B.

### Forming the fiber-optic-connector assembly

A first embodiment of fiber-optic-connector assembly 100 is formed by first forming the split configuration for cable 10 with jacket split ends 20A and 20B, as shown for example in FIG. 1B and FIG. 3A. A securing member 400 shown by way of example in the form of a crimp band (hereinafter, crimp band 400) is then slid over cable 10 behind jacket split ends 20A and 20B (see FIG. 3A). The crimp band 400 can also be slid over cable 10 prior to the formation of jacket split ends 20A and 20B.

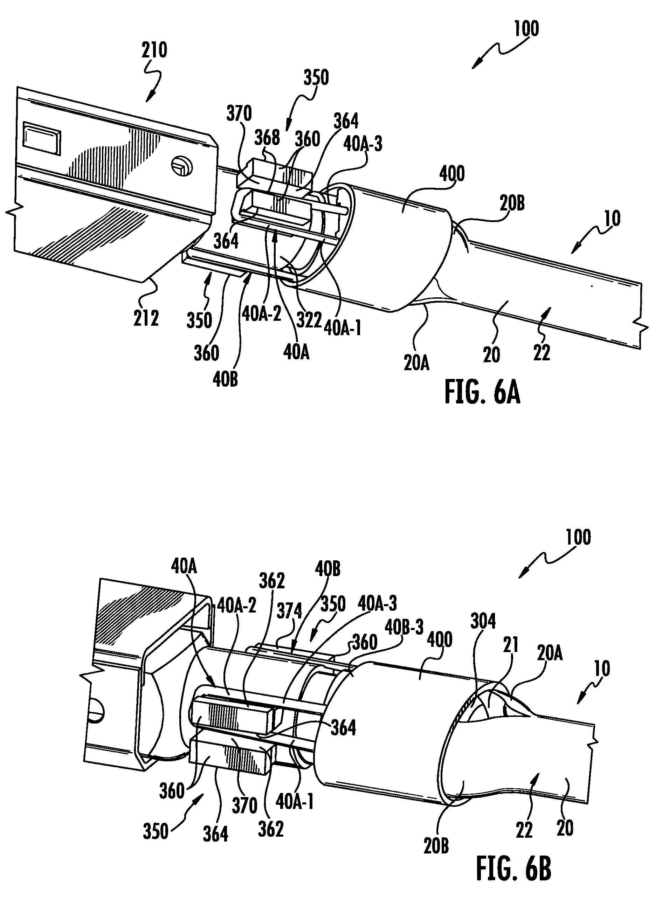

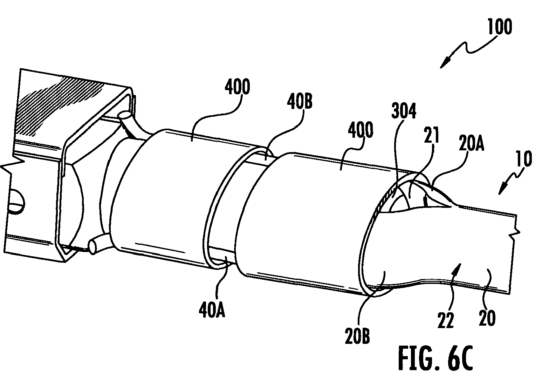

FIGS. 6A and 6B are close-up bottom-up and top-down elevated views of a central portion of assembly 100 that includes attachment structure 300 of FIGS. 4A and 4B. With reference also to FIGS. 6A and 6B, jacket split ends 20A and 20B are separated and disposed around a portion of outer surface 312 of attachment member 300 adjacent back end 304. The optical fibers 30 are fed through central bore 306 so that they extend from front end 302 of attachment member 300. In an example, optical fibers 30 are secured within bore 306 at front portion 306F. This can be accomplished for example by using a suitable adhesive, such as a UV-curable adhesive.

The next step involves securing cable 10 to attachment structure 300. This is accomplished in the first example by taking strength members 40A and 40B and leading them to the nearest securing features 350 extending from the attachment structure. The strength members 40A and 40B are then wrapped around the corresponding (nearest) securing feature 350 as desired. The remaining portions of strength members 40A and 40B may be led back to jacket 20, e.g., either to the corresponding jacket split end 20A or 20B or to the opening 21 in between the two jacket split ends.

FIGS. 6A and 6B show strength member 40A as having a first portion 40A-1 that leads out to securing feature 350, a second portion 40A-2 that engages the securing feature, and a third portion 40A-3 that returns to cable 10 and is secured thereto. In an example, the same configuration is provided for strength member 40B, a portion of which is visible in FIGS. 6A and 6B.

This example loop-back configuration of strength members 40A and 40B allows for the securing tension between cable 10 and each securing feature 350 to be distributed between two separated portions of each strength member rather than being borne by a single portion of a given strength member. This allows for a stronger connection, as compared to using a single strength member 40 to bear the entire force of its connection to the corresponding securing feature 350. The separation of the strength member portions 40A-1 and 40A-3 (and the corresponding portions of strength member 40B) also provides for a more stable connection as compared to using a single strength member portion for establishing the connection.

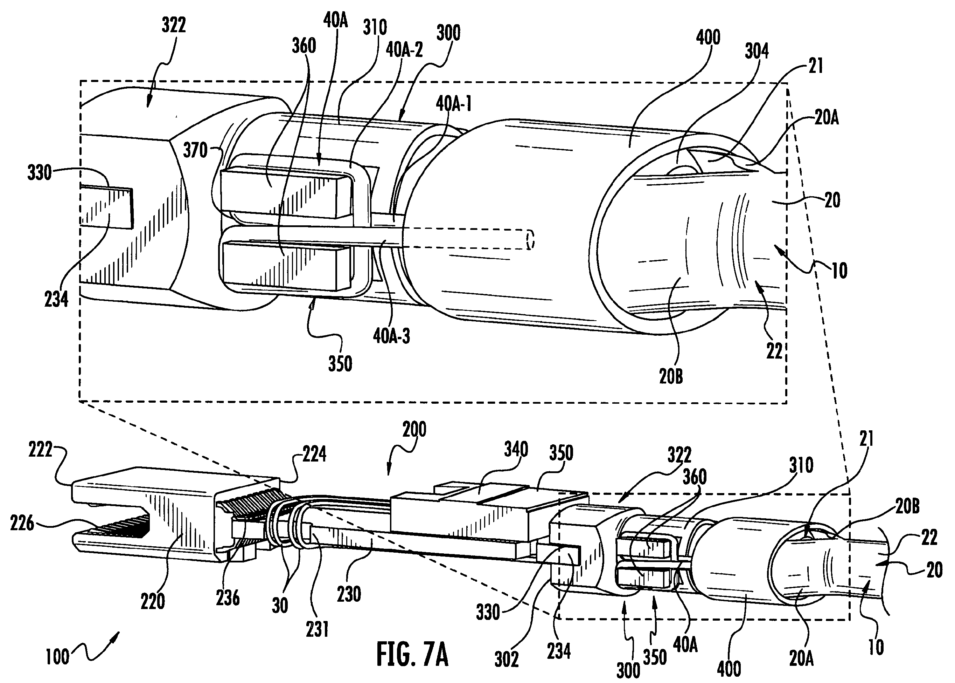

Each strength member 40A and 40B can engage the corresponding securing feature 350 in a variety of ways, e.g., multiple wraps, through slot 330 once or multiple times, around both tabs 360, etc. as desired. FIG. 7A is a side elevated view of an example assembly 100 without housing 210 and includes a close-up view that illustrates an example of wrapping strength member portion 40A-2 around each tab 360. The wrapping including two passes through slot 330, and also shows the strength member portion 40A-3 led back to jacket 20 so that strength member portions 40A-1 and 40A-3 almost overlap on the way to and from securing feature 350.

Once strength members 40A and 40B are engaged with the corresponding securing features 350, crimp band 400 is then slid forward to cover jacket split ends 20A and 20B. Then, third (end) portion 40A-3 of strength member 40A, as well as the corresponding third (end) portion of strength member 40B, are led back to jacket 20 and secured thereto under tension by crimping the crimp band using, for example, a conventional crimping tool. This serves to attach structure 300 to cable 10.

Additional securing means can also be employed at this point, such as the addition of heat-shrink tubing. An adhesive can also be used to further secure the portion of strength members 40 returning from securing features 350 to cable 10. In another example, slit opening 21 in jacket 20 formed by jacket split ends 20A and 20B can be sealed using a sealing means such as UV-curable silicone, heat-shrink tubing, overmolded polymer, etc.

In an example, another crimp band 400 (not shown) may disposed around attachment structure 300 and securing feature 350 and then crimped to further secure strength members 40A and 40B to the attachment structure. Alternatively or in addition thereto, an adhesive or shrink-wrap can be used to enhance the strength of the attachment of strength members 40A and 40B to attachment structure 300. At this point, the combination of cable 10 and attachment structure 300 attached (secured) thereto defines an attachment assembly.

The connector 200 is then secured to front end 302 of attachment structure 300 to form fiber-optic-cable assembly (i.e., connectorized cable) 100. In an example, this is accomplished by inserting back end 234 of printed circuit board 230 into slot 330 of front section 322 of attachment structure 300 (see, e.g., FIG. 4A). Any suitable means of securing the circuit board to the attachment structure 300 is possible such as adhesives, screws, clamping, etc. In an example, front section 322 of attachment structure 300 extends at least partially into housing interior 216. In another example, back end 214 of housing 210 is configured to engage front end 302 of attachment structure 300. In an example, an overmold (not shown) at housing back end 214 is used to engage front section 322 of attachment structure 300.

The optical fibers 30 that pass through bore 306 and that extend from front end 302 of attachment structure 300 are then operably incorporated into connector 200, such as in the manner described above with respect to the example optical-electrical connector of FIGS. 2A through 2C and FIG. 3A. At this point, additional securing means may also be applied to assembly 100, such as a shrink-wrap, an overmold, an adhesive or any combination of these securing means.

A second embodiment of assembly 100 is formed in a manner similar the first embodiment as described above, except that attachment structure 300 that does not include securing features 350 (see FIGS. 5A and 5B) extending from an outer surface of the main body for wrapping strength members. In this second embodiment, rather than strength members 40 being engaged by securing features 350, the strength members are secured against outer surface 312 (i.e., an outer barrel of the main body) using a securing member, e.g., a second crimp band 400. Second crimp band 400 is slid over back end 304 of attachment structure 300, as shown in FIG. 3B. Moreover, the concepts disclosed herein maybe used with a single crimp band about the outer barrel of the main body for securing the strength members and/or cable jacket to the attachment structure. As desired the attached strength members under the crimp band may be disposed within the connector housing when assembled or outside the connector housing when assembled.

Further, sttrength members 40 can either run back to cable 10 and secured thereto with the crimp band 400 that attaches to cable 10. Alternatively, strength members 40 can be terminated shortly after the second crimp band. In an example, a single crimp band 400 can be used that covers both the back end portion of attachment structure 300 and the end of cable 10. This single crimp band can have a uniform diameter or have a stepped diameter as desired.

FIG. 7B is similar to FIG. 7A and illustrates an embodiment of the second example assembly 100 wherein the attachment structure 300 does not include securing features and wherein strength members 40 are secured to the attachment structure using a second crimp band 400.

The present disclosure is also directed to a method of making a fiber-optic-connector assembly including the steps of providing a fiber-optic cable having a jacket with a central channel that contains at least one optical fiber and at least one strength member, providing an attachment structure defined by a sleeve having front and back ends, an outer surface and a central bore through which the at least one optical fiber passes from the back end and extends from the front end, with at least one securing feature formed on the outer surface, and attaching the at least one strength member to the securing feature formed on the outer surface of the attachment structure, securing a circuit board to a front end of the attachment structure, with the at least one optical fiber operably connected to a connector. Along with other steps as discussed and disclosed herein.

It will be apparent to those skilled in the art that various modifications to the preferred embodiments of the disclosure as described herein can be made without departing from the scope of the disclosure as defined in the appended claims. Thus, the disclosure covers the modifications and variations provided they come within the scope of the appended claims and the equivalents thereto.

## Claims

1. An attachment structure (300) for attaching a connector to a fiber-optic cable having at least one strength member (40, 40A, 40B) and at least one optical fiber, comprising:
a sleeve having opposite front and back ends (302, 304) and a central bore (306) that runs generally along a central axis, the sleeve having a generally cylindrical main body section (310) with an outer surface (312) and that includes the back end (304), wherein the central bore (306) is sized to pass the at least one optical fiber;
at least one securing feature (350) formed on the outer surface (312) of the main body section (310),
**characterized in that**
the sleeve further has at the front end (302) a front mounting section (322) configured for supporting a circuit board (230):
the at least one securing feature (350) consists of first and second securing features (350) comprising first and second tabs (360) that outwardly extend from opposite sides of the main body section (310) so that the at least one strength member (40, 40A, 40B) can be secured to the securing feature (350).

2. An attachment assembly, comprising:
the attachment structure (300) of claim 1; and
the fiber-optic cable (10) attached to the attachment structure (300) at the back end by the at least one strength member (40, 40A, 40B) being secured to the attachment structure (300) using a crimp band, with the at least one optical fiber passing through the central bore (306).

3. An attachment assembly, comprising:
the attachment structure (300) of claim 1; and
the fiber-optic cable (10) attached to the attachment structure (300) at the back end by the at least one strength member(40, 40A, 40B) engaging the at least one securing feature (350), with the at least one optical fiber passing through the central bore (306).

4. A fiber-optic-connector assembly, comprising:
the attachment structure (300) of claim 1; and
a connector (200) attached to the front end of the attachment assembly (300), with the at least one optical fiber being operably connected to the connector (200).

5. A method of making a fiber-optic-connector assembly, comprising:
providing a fiber-optic cable (10) having a jacket with a central channel that contains at least one optical fiber and at least one strength member;
providing an attachment structure (300) of claim 1; and
attaching the at least one strength member (40, 40A, 40B) to at least one securing feature formed on the outer surface of the attachment structure;
securing a circuit board (230) to a front end of the attachment structure (300), with the at least one optical fiber operably connected to a connector (200).

6. The method of claim 5, wherein the fiber-optic cable (10) includes first and second strength members, the attachment structure (300) includes first and second securing features (350) on opposite sides of the outer surface, and wherein respective second portions of the first and second strength members are respectively wound around the first and second securing features.

7. The method of claim 5 or 6, wherein a third portion (40A-3) of the at least one strength member (40, 40A, 40B) runs from the at least one securing feature back to the fiber-optic cable (10) and is secured thereto so that the first and third portions of the at least one strength member (40, 40A, 40B) are under tension.

8. The method of one of claims 5-7, wherein the at least one strength member defines first and second strength members (40A, 40B), the at least one securing feature (350) defines first and second securing features on opposite sides of the main body section (310), and wherein the first and second strength members are respectively secured to the first and second securing features.

9. The method of one of claims 5-8, wherein the first and second strength members (40A, 40B) each include third portions that respectively run from the first and second securing features (350) back to the fiber-optic cable (10) and are secured thereto.

10. The method of one of claim 5-9, wherein the connector (200) includes a circuit board (230) having a back end, and wherein the attachment structure (300) front end includes a slot (330) configured to receive the back end of the circuit board (230).

11. An attachment assembly for a fiber-optic-connector assembly, comprising:
a fiber-optic cable (10) having a jacket (20) with an outer surface (22), a central cavity (26) that contains at least one optical fiber, and first and second axially offset longitudinal strength members, wherein the fiber-optic cable (10) is split to define first and second split ends (20A, 20B) that respectively contain the first and second strength members;
an attachment structure (300) of claim 1, with the first and second split ends (20A, 20B) disposed adjacent a portion of the outer surface of the attachment structure (300) at the back end, with the at least one optical fiber passing through the central bore (306) from the back end and extending through the front end; and
wherein the first and second strength members (40A, 40B) respectively engage the first and second securing features (350).

12. The attachment assembly of claim 11, wherein the securing member (350) comprises a crimp band (400) that is crimped around the outer surface of the fiber-optic cable and that engages end portions of the first and second strength members against the outer surface.

13. A fiber-optic-connector assembly, comprising:
the attachment assembly of claims 11 or 12; and
a connector (200) operably connected to the front end of the attachment feature, with the at least one optical fiber operably coupled to at least one component of the connector (200).

14. The fiber-optic-connector assembly of claim 13, wherein the at least one component is either a photodetector or a light source.

15. The fiber-optic-connector assembly of claim 13 or 14 wherein the securing features (350) each include a pair of outwardly extending tabs (360), and wherein the first and second strength members are respectively wrapped around at least one of the outwardly extending tabs (360).

## Patentansprüche

1. Befestigungsstruktur (300) zum Befestigen eines Verbinders an einem faseroptischen Kabel, das wenigstens ein Verstärkungselement (40, 40A, 40B) und wenigstens eine Lichtleitfaser enthält, die Folgendes umfasst:
eine Hülse mit einem vorderen Ende, einem gegenüberliegenden hinteren Ende (302, 304) und einer Mittelbohrung (306), die im Allgemeinen längs einer Mittelachse verläuft, wobei die Hülse einen im Allgemeinen zylindrischen Hauptkörperabschnitt (310) mit einer äußeren Oberfläche (312), der das hintere Ende (304) enthält, besitzt, wobei die Mittelbohrung (306) so bemessen ist, dass durch sie die wenigstens eine Lichtleitfaser verlaufen kann;
wenigstens ein Sicherungsmerkmal (350), das auf der äußeren Oberfläche (312) des Hauptkörperabschnitts (310) ausgebildet ist,
**dadurch gekennzeichnet, dass**
die Hülse ferner am vorderen Ende (302) einen vorderen Montageabschnitt (322) besitzt, der konfiguriert ist, eine Leiterplatte (230) zu tragen;
das wenigstens eine Sicherungsmerkmal (350) aus einem ersten und einem zweiten Sicherungsmerkmal (350) besteht, die eine erste und eine zweite Lasche (360) aufweisen, die sich von gegenüberliegenden Seiten des Hauptkörperabschnitts (310) nach außen erstrecken, so dass das wenigstens eine Verstärkungselement (40, 40A, 40B) an dem Sicherungsmerkmal (350) gesichert werden kann.

2. Befestigungsanordnung, die Folgendes umfasst:
die Befestigungsstruktur (300) nach Anspruch 1; und
das faseroptische Kabel (10), das an der Befestigungsstruktur (300) am hinteren Ende durch das wenigstens eine Verstärkungselement (40, 40A, 40B), das an der Befestigungsstruktur (300) unter Verwendung eines Krimpbandes gesichert ist, befestigt ist, wobei die wenigstens eine Lichtleitfaser durch die Mittelbohrung (306) verläuft.

3. Befestigungsanordnung, die Folgendes umfasst:
die Befestigungsstruktur (300) nach Anspruch 1; und
das faseroptische Kabel (10), das an der Befestigungsstruktur (300) am hinteren Ende durch das wenigstens eine Verstärkungselement (40, 40A, 40B), das mit dem wenigstens einen Sicherungsmerkmal (350) in Eingriff ist, befestigt ist, wobei die wenigstens eine Lichtleitfaser durch die Mittelbohrung (306) verläuft.

4. Faseroptische Verbinderanordnung, die Folgendes umfasst:
die Befestigungsstruktur (300) nach Anspruch 1; und
einen Verbinder (200), der am vorderen Ende der Befestigungsanordnung (300) befestigt ist, wobei die wenigstens eine Lichtleitfaser mit dem Verbinder (200) betriebstechnisch verbunden ist.

5. Verfahren zum Herstellen einer faseroptischen Verbinderanordnung, das Folgendes umfasst:
Bereitstellen eines faseroptischen Kabels (10), das eine Ummantelung mit einem Mittelkanal, der wenigstens eine Lichtleitfaser und wenigstens ein Verstärkungselement enthält, besitzt;
Bereitstellen einer Befestigungsstruktur (300) nach Anspruch 1; und
Befestigen des wenigstens einen Verstärkungselements (40, 40A, 40B) an wenigstens einem Sicherungsmerkmal, das an der äußeren Oberfläche der Befestigungsstruktur ausgebildet ist;
Sichern einer Leiterplatte (230) an einem vorderen Ende der Befestigungsstruktur (300), wobei die wenigstens eine Lichtleitfaser mit einem Verbinder (200) betriebstechnisch verbunden ist.

6. Verfahren nach Anspruch 5, wobei das faseroptische Kabel (10) ein erstes und ein zweites Verstärkungselement enthält, die Befestigungsstruktur (300) ein erstes und ein zweites Sicherungsmerkmal (350) auf gegenüberliegenden Seiten der äußeren Oberfläche enthält und jeweilige zweite Abschnitte des ersten und des zweiten Verstärkungselements um das erste bzw. das zweite Sicherungsmerkmal gewickelt sind.

7. Verfahren nach Anspruch 5 oder 6, wobei ein dritter Abschnitt (40A-3) des wenigstens einen Verstärkungselements (40, 40A, 40B) von dem wenigstens einen Sicherungsmerkmal zurück zu dem faseroptischen Kabel (10) verläuft und daran gesichert ist, so dass der erste und der dritte Abschnitt des wenigstens einen Verstärkungselements (40, 40A, 40B) unter Spannung sind.

8. Verfahren nach einem der Ansprüche 5-7, wobei das wenigstens eine Verstärkungselement ein erstes und ein zweites Verstärkungselement (40A, 40B) definiert, das wenigstens eine Sicherungsmerkmal (350) ein erstes und ein zweites Sicherungsmerkmal auf gegenüberliegenden Seiten des Hauptkörperabschnitts (310) definiert und das erste und das zweite Verstärkungselement an dem ersten bzw. dem zweiten Sicherungsmerkmal gesichert sind.

9. Verfahren Ansprüche 5-8, wobei das erste und das zweite Verstärkungselement (40A, 40B) jeweils dritte Abschnitte enthalten, die von dem ersten bzw. dem zweiten Sicherungsmerkmal (350) zurück zu dem faseroptischen Kabel (10) verlaufen und gesichert sind.

10. Verfahren nach einem 5-9, wobei der Verbinder (200) eine Leiterplatte (230) enthält, die ein hinteres Ende besitzt, und wobei das vordere Ende der Befestigungsstruktur (300) einen Schlitz (330) aufweist, der konfiguriert ist, das hintere Ende der Leiterplatte (230) aufzunehmen.

11. Befestigungsanordnung für eine faseroptische Verbinderanordnung, die Folgendes umfasst:
ein faseroptisches Kabel (10), das eine Ummantelung (20) mit einer äußeren Oberfläche (22), einen Mittelhohlraum (26), der wenigstens eine Lichtleitfaser enthält, und ein erstes und ein zweites longitudinales Verstärkungselement, die axial zueinander versetzt sind, besitzt, wobei das faseroptische Kabel (10) aufgeteilt ist, um ein erstes und ein zweites Teilungsende (20A, 20B) zu definieren, die das erste bzw. das zweite Verstärkungselement enthalten;
eine Befestigungsstruktur (300) nach Anspruch 1, wobei das erste und das zweite Teilungsende (20A, 20B) in der Nähe eines Abschnitts der äußeren Oberfläche der Befestigungsstruktur (300) am hinteren Ende angeordnet sind, wobei die wenigstens eine Lichtleitfaser von dem hinteren Ende durch die Mittelbohrung (306) verläuft und sich durch das vordere Ende erstreckt; und
wobei das erste und das zweite Verstärkungselement (40A, 40B) mit dem ersten bzw. dem zweiten Sicherungsmerkmal (350) in Eingriff sind.

12. Befestigungsanordnung nach Anspruch 11, wobei das Sicherungselement (350) ein Krimpband (400) umfasst, das um die äußere Oberfläche des faseroptischen Kabels gekrimpt ist und das Endabschnitte des ersten und des zweiten Verstärkungselements mit der äußeren Oberfläche in Eingriff bringt.

13. Faseroptische Verbinderanordnung, die Folgendes umfasst:
die Befestigungsanordnung nach den Ansprüchen 11 oder 12; und
einen Verbinder (200), der mit dem vorderen Ende des Befestigungsmerkmals betriebstechnisch verbunden ist, wobei die wenigstens eine Lichtleitfaser mit wenigstens einer Komponente des Verbinders (200) betriebstechnisch gekoppelt ist.

14. Faseroptische Verbinderanordnung nach Anspruch 13, wobei die wenigstens eine Komponente entweder ein Photodetektor oder eine Lichtquelle ist.

15. Faseroptisches Verbinderanordnung nach Anspruch 13 oder 14, wobei die Sicherungsmerkmale (350) jeweils ein Paar sich nach außen erstreckender Laschen (360) enthalten und wobei das erste und das zweite Verstärkungselement entsprechend um wenigstens eine der sich nach außen erstreckenden Laschen (360) gewickelt sind.

## Revendications

1. Structure (300) de fixation destinée à fixer un connecteur à un câble à fibre optique doté d'au moins un élément (40, 40A, 40B) de renfort et d'au moins une fibre optique, comportant :
un fourreau présentant des extrémités avant et arrière (302, 304) opposées et un alésage central (306) qui suit généralement un axe central, le fourreau présentant une section (310) de corps principal généralement cylindrique dotée d'une surface extérieure (312) et qui comprend l'extrémité arrière (304), l'alésage central (306) est dimensionné pour laisser passer la ou les fibres optiques ;
au moins un détail (350) d'accrochage formé sur la surface extérieure (312) de la section (310) de corps principal,
**caractérisée en ce que**
le fourreau est en outre doté à l'extrémité avant (302) d'une section (322) de montage avant configurée pour porter une carte (230) à circuits ;
le ou les détails (350) d'accrochage sont constitués de premier et deuxième détails (350) d'accrochage comportant des première et deuxième languettes (360) qui s'étendent vers l'extérieur à partir de côtés opposés de la section (310) de corps principal de telle sorte que l'élément ou les éléments (40, 40A, 40B) de renfort puissent être accrochés au détail (350) d'accrochage.

2. Ensemble de fixation, comportant :
la structure (300) de fixation selon la revendication 1 ; et
le câble (10) à fibre optique fixé à la structure (300) de fixation à l'extrémité arrière par l'accrochage de l'élément ou des éléments (40, 40A, 40B) de renfort à la structure (300) de fixation à l'aide d'une bande de sertissage, la ou les fibres optiques passant à travers l'alésage central (306).

3. Ensemble de fixation, comportant :
la structure (300) de fixation selon la revendication 1 ; et
le câble (10) à fibre optique fixé à la structure (300) de fixation à l'extrémité arrière par l'interaction de l'élément ou des éléments (40, 40A, 40B) de renfort avec le ou les détails (350) d'accrochage, la ou les fibres optiques passant à travers l'alésage central (306).

4. Ensemble de connecteur à fibre optique, comportant :
la structure (300) de fixation selon la revendication 1 ; et
un connecteur (200) fixé à l'extrémité avant de l'ensemble de fixation (300), la ou les fibres optiques étant reliées fonctionnellement au connecteur (200).

5. Procédé de fabrication d'un ensemble de connecteur à fibre optique, comportant les étapes consistant à :
mettre en place un câble (10) à fibre optique doté d'une gaine comprenant un canal central qui contient au moins une fibre optique et au moins un élément de renfort ;
mettre en place une structure (300) de fixation selon la revendication 1 ; et
fixer l'élément ou les éléments (40, 40A, 40B) de renfort à au moins un détail d'accrochage formé sur la surface extérieure de la structure de fixation ;
fixer une carte (230) à circuits à une extrémité avant de la structure (300) de fixation, la ou les fibres optiques étant reliées fonctionnellement à un connecteur (200).

6. Procédé selon la revendication 5, le câble (10) à fibre optique comprenant des premier et deuxième éléments de renfort, la structure (300) de fixation comprenant des premier et deuxième détails (350) d'accrochage sur des côtés opposés de la surface extérieure, et des deuxièmes parties respectives des premier et deuxième éléments de renfort étant respectivement enroulées autour des first et second détails d'accrochage.

7. Procédé selon la revendication 5 ou 6, une troisième partie (40A-3) de l'élément ou des éléments (40, 40A, 40B) de renfort revenant du ou des détails d'accrochage jusqu'au câble (10) à fibre optique et étant accrochée à celui-ci de telle sorte que les première et troisièmes parties de l'élément ou des éléments (40, 40A, 40B) de renfort soient en traction.

8. Procédé selon l'une des revendications 5 à 7, l'élément ou les éléments de renfort définissant des premier et deuxième éléments (40A, 40B) de renfort, le ou les détails (350) d'accrochage définissant des premier et deuxième détails d'accrochage sur des côtés opposés de la section (310) de corps principal, et les premier et deuxième éléments de renfort étant respectivement accrochés aux premier et deuxième détails d'accrochage.

9. Procédé selon l'une des revendications 5 à 8, chacun des premier et deuxième éléments (40A, 40B) de renfort comprenant des troisièmes parties qui reviennent respectivement des premier et deuxième détails (350) d'accrochage jusqu'au câble (10) à fibre optique et sont accrochées à celui-ci.

10. Procédé selon l'une des revendications 5 à 9, le connecteur (200) comprenant une carte (230) à circuits présentant une extrémité arrière, et la structure (300) de fixation extrémité avant comprenant une fente (330) configurée pour recevoir l'extrémité arrière de la carte (230) à circuits.

11. Ensemble de fixation destiné à un ensemble de connecteur à fibre optique, comportant :
un câble (10) à fibre optique doté d'une gaine (20) présentant une surface extérieure (22), une cavité centrale (26) qui contient au moins une fibre optique, et des premier et deuxième éléments de renfort longitudinaux décalés axialement, le câble (10) à fibre optique étant dédoublé pour définir des première et deuxième extrémités dédoublées (20A, 20B) qui contiennent respectivement les premier et deuxième éléments de renfort ;
une structure (300) de fixation selon la revendication 1, les première et deuxième extrémités dédoublées (20A, 20B) étant disposées au voisinage d'une partie de la surface extérieure de la structure (300) de fixation à l'extrémité arrière, la ou les fibres optiques passant à travers l'alésage central (306) en partant de l'extrémité arrière et s'étendant à travers l'extrémité avant ; et
les premier et deuxième éléments (40A, 40B) de renfort interagissant respectivement avec les premier et deuxième détails (350) d'accrochage.

12. Ensemble de fixation selon la revendication 11, l'élément (350) d'accrochage comportant une bande (400) de sertissage qui est sertie autour de la surface extérieure du câble à fibre optique et qui interagit avec des parties d'extrémités des premier et deuxième éléments de renfort contre la surface extérieure.

13. Ensemble de connecteur à fibre optique, comportant :
l'ensemble de fixation selon les revendications 11 ou 12 ; et
un connecteur (200) relié fonctionnellement à l'extrémité avant du détail d'accrochage, la ou les fibres optiques étant couplées fonctionnellement à au moins un composant du connecteur (200).

14. Ensemble de connecteur à fibre optique selon la revendication 13, le ou les composants étant soit un photodétecteur, soit une source lumineuse.

15. Ensemble de connecteur à fibre optique selon la revendication 13 ou 14, chacun des détails d'accrochage (350) comprenant une paire de languettes (360) s'étendant vers l'extérieur, et les premier et deuxième éléments de renfort enveloppant respectivement au moins une des languettes (360) s'étendant vers l'extérieur.
